(19) Europäisches Patentamt
European Patent Office
Office européen des brevets

(11) **EP 3 406 520 B1**

(12) **FASCICULE DE BREVET EUROPEEN**

(45) Date de publication et mention de la délivrance du brevet:
**03.07.2019 Bulletin 2019/27**

(51) Int Cl.:
**B64C 27/00** *(2006.01)*

(21) Numéro de dépôt: **18164556.5**

(22) Date de dépôt: **28.03.2018**

(54) **PROCEDE ET SYSTEME D'ANTICIPATION DE L'ENTREE DANS UN DOMAINE DE VORTEX PAR UN GIRAVION**

VERFAHREN UND SYSTEM ZUR ANTIZIPATION DES EINTRITTS EINES DREHFLÜGLERS IN DEN VORTEXBEREICH

A METHOD AND A SYSTEM FOR ANTICIPATING THE ENTRY OF A ROTORCRAFT INTO A VORTEX DOMAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2017 FR 1770526**

(43) Date de publication de la demande:
**28.11.2018 Bulletin 2018/48**

(73) Titulaire: **Airbus Helicopters**
**13725 Marignane Cedex (FR)**

(72) Inventeur: **QUARANTA, Hugo**
**92120 MONTROUGE (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 3 263 452     WO-A2-2004/101358**

• **Oliver Westbrook-Netherton ET AL: "An Investigation into Predicting Vortex Ring State in Rotary Aircraft", , 21 juillet 2015 (2015-07-21), XP055437446, DOI: 10.13140/RG.2.1.2294.5122 Extrait de l'Internet: URL:https://www.researchgate.net/profile/Oliver_Westbrook-Netherton/publication/280234195_An_Investigation_into_Predicting_Vortex_Ring_State_in_Rotary_Aircraft/links/55ae59af08aee0799220d932/An-Investigation-into-Predicting-Vortex-Ring-State-in-Rotary-Aircraft.pdf [extrait le 2017-12-21]**
• **DAVID J VARNES: "Development of a Helicopter Vortex Ring State Warning System Through a Moving Map Display Computer", TH,, 29 novembre 1999 (1999-11-29), XP009100651,**

EP 3 406 520 B1

# Description

La présente invention est du domaine des aides au pilotage d'un giravion et en particulier des systèmes de surveillance de la proximité d'un domaine de vol désigné généralement par la dénomination « vortex » par l'homme du métier.

La présente invention concerne un procédé et un système d'anticipation de l'entrée dans un domaine de vortex par un giravion, notamment du type hélicoptère.

Plus particulièrement, ce procédé et ce système d'anticipation sont destinés à alerter le pilote d'un giravion que le giravion est proche, voire aborde un domaine de vortex.

Un giravion, aussi appelé « aéronef à voilure tournante », est équipé d'au moins un rotor principal d'axe sensiblement vertical assurant au moins la sustentation du giravion. Le rotor principal comporte des pales animées d'un mouvement de rotation. Dans le cas particulier de l'hélicoptère, le rotor principal, entraîné par au moins un moteur, assure à la fois la sustentation et la propulsion.

Dans ces conditions, un giravion exécute en principe trois sortes de vols, hors phases particulières de décollage, d'atterrissage et de virages :

- un vol vertical, ascendant ou descendant,
- un vol stationnaire, le giravion étant immobile, et
- un vol de translation horizontal.

L'invention se rapporte aux vols de descente, principalement lors des phases d'approche en vue d'un atterrissage, ainsi qu'au vol proche d'un vol stationnaire.

En effet, lors d'un vol de descente, l'écoulement de l'air généré par le rotor principal diffère selon que la descente est rapide, modérée ou lente.

Les vols à descente rapide ou modérée sont généralement des régimes « non motorisés ». La puissance nécessaire est fournie par le flux d'air et une roue libre intercalée dans l'ensemble de transmission de puissance mécanique permet au rotor principal de tourner librement.

En descente rapide, le régime d'écoulement d'air obtenu correspond à celui du moulinet-frein et en descente modérée, le vol correspond à l'autorotation.

A contrario, le vol à descente lente est un régime motorisé, le pilote provoquant et contrôlant la descente du giravion par une variation du pas collectif des pales du rotor principal.

L'invention concerne plus spécifiquement le vol à descente lente d'un giravion, par exemple à partir d'une position de vol stationnaire, cette descente pouvant se faire de façon verticale pure ou encore selon une forte pente de la trajectoire, c'est-à-dire avec une faible vitesse horizontale.

Lors d'un vol à descente lente, un sillage, formé par l'écoulement de l'air, apparaît sous le rotor principal, ce qui oblige les filets d'air centraux inférieurs à se rabattre vers le bas et les filets d'air centraux supérieurs à créer une zone tourbillonnaire vers la périphérie des pales. L'écoulement aérodynamique est alors perturbé et des tourbillons périphériques risquent de se développer en isolant complètement le plan du rotor principal. Ce phénomène dangereux, désigné « état de vortex », entraîne une perte générale de sustentation et de maniabilité du giravion.

Dans ces conditions, quand un giravion en vol stationnaire se met à amorcer une descente verticale, l'inversion du sens des vitesses de l'écoulement d'air risque d'empêcher le flux d'air de traverser le rotor principal soit vers le haut, soit vers le bas. Les pales travaillent alors dans leur propre remous et l'air forme un anneau tourbillonnaire autour du rotor principal. Cet état de vortex se trouve à l'origine des vibrations dangereuses sur le giravion et risque d'amener des pertes de contrôle du giravion.

L'anneau tourbillonnaire se développe en général pour une vitesse verticale égale à environ la moitié de la vitesse induite moyenne en vol stationnaire hors effet de sol et avec une vitesse d'avancement faible ou sensiblement nulle, bien qu'il puisse également apparaître pour une vitesse verticale inférieure. Une partie importante du rotor principal se trouve alors dans une zone de décrochage, les divers éléments de pale travaillant alors avec un angle d'incidence relativement élevé. Suite à une translation horizontale significative du giravion, le remous du rotor principal est rejeté vers l'arrière, de sorte que l'état de vortex ne se produit plus.

L'état de vortex est redouté car il isole le giravion de la masse d'air dans laquelle il évolue. Les trois cas principaux de possibilité d'entrer dans un état de vortex sont :

- le vol stationnaire avec une dérive non maîtrisée de la vitesse verticale du giravion,
- les phases d'approche en vue d'un atterrissage où la vitesse verticale d'entrée possible dans un état de vortex est affichée avec une réduction non maîtrisée de la vitesse d'avancement et/ou avec une remontée trop tardive du pas collectif des pales du rotor principal, donc de la puissance de vol, et
- les phases de ralentissement non maitrisées en vue d'un vol stationnaire, pour réaliser par exemple un treuillage ou dues à de mauvaises conditions météorologiques avec une remontée trop tardive du pas collectif des pales du rotor principal.

Un domaine de vortex est donc dangereux, mais peut être abandonné par le pilote, en amorçant une translation vers l'avant par modification du pas cyclique longitudinal des pales du rotor principal. La sortie d'un état de vortex peut être assez longue.

Dans la majorité des cas, l'entrée dans un état de vortex se fait à faible hauteur et, de fait, la vitesse verticale du giravion ainsi que le temps de sortie de cet état de vortex aboutissent généralement au crash du giravion. Un état de vortex est en quelque sorte équivalent au décrochage observé sur les avions.

Afin d'anticiper le risque que le giravion n'entre dans un domaine de vortex, des procédés et des systèmes d'alerte existent et préviennent le pilote que le giravion évolue à proximité d'un domaine de vortex ou bien dans un tel domaine.

Par exemple, le document EP 1950718 décrit un système et une méthode déclenchant une alerte lorsque d'une part la vitesse du vent arrière subi par le giravion est supérieure à un premier seuil déterminé en fonction de la hauteur du giravion par rapport au sol et d'autre part la vitesse de descente du giravion est supérieure à un second seuil. Par contre, ce système et cette méthode fonctionnent uniquement lorsque le giravion évolue en condition de vent arrière.

On connait également le document FR 2921635 qui décrit un procédé et un dispositif permettant de détecter l'entrée d'un giravion dans un domaine de vortex ou encore, de façon prédictive, l'approche du giravion dans un tel domaine de vortex. Cette détection de façon prédictive est effectuée en fonction d'une vitesse propre prédictive et d'une vitesse verticale prédictive du giravion déterminées en temps réel et éventuellement corrigées.

Par ailleurs, le document EP 2513732 décrit un système et une méthode permettant de détecter si un aéronef est proche ou bien dans une situation de décrochage aérodynamique, puis d'engager une procédure automatique pour éviter de rentrer dans une situation dangereuse ou bien pour en sortir. La détection d'une telle situation est réalisée en comparant une erreur de vitesse verticale entre la vitesse verticale courante et la vitesse verticale commandée à un seuil d'erreur et en vérifiant sa polarité. L'accélération verticale et la vitesse d'avancement de l'aéronef peuvent également être comparées respectivement à un seuil pour vérifier si l'aéronef est sorti de la situation de décrochage.

On connait aussi le document WO 2012/007157 qui décrit une méthode basée sur la détection d'une absence de corrélation entre les commandes de vol du giravion et son comportement vertical pour estimer l'approche d'un état de vortex.

De plus, le document US 2011/0295568 décrit une méthode pour déterminer des changements de géométrie de l'état de vortex provoqués par les pales du rotor principal d'un giravion selon la vitesse verticale induite de ce rotor principal et la distribution de portance des pales de ce rotor principal.

En outre, on connaît le document FR 2978586 qui décrit un procédé et un dispositif d'aide au pilotage destiné à un aéronef hybride muni d'un rotor principal et d'au moins une hélice propulsive. Ce procédé permet de définir une pente minimale que peut suivre l'aéronef en descente en fonction d'une marge de poussée de chaque hélice propulsive. Cette pente minimale peut notamment être utilisée afin d'éviter l'entrée de l'aéronef hybride dans un domaine de vortex.

Enfin, le document WO 2004/101358 décrit un système de commande de vol pour giravion permettant d'éviter l'apparition d'un état de vortex. Ce système de commande de vol agit sur les pas collectif et/ou cyclique des pales de chaque rotor principal, par exemple de façon oscillatoire, afin de générer des perturbations sur ses pales évitant ainsi l'apparition d'un état de vortex.

L'arrière plan technologique de l'invention comporte également les publications de Oliver WESTBROOK-NETHERTON du 21 juillet 2015, «An Investigation into Predicting Vortex Ring State in Rotary Aircraft », et de David J; VAERNES de septembre 1999, « Development of a Helicopter Vortex Ring State Warning System through a Moving Map Display Computer ».

On constate que les procédés et dispositifs de l'art antérieur permettant la détection de l'approche d'un domaine de vortex utilisent majoritairement des seuils de vitesse issus d'essais en vol et délimitant un domaine de vol relativement localisé correspondant à l'apparition probable d'un état de vortex. Ces seuils de vitesse doivent être déterminés pour chaque type de giravions, en particulier selon leurs dimensions et leurs masses, lors d'essais en vol et/ou de simulations.

Le choix de ces seuils de vitesse est primordial pour assurer efficacement la détection de la proximité du domaine de vortex, tout en évitant des détections intempestives. Cependant, les conditions expérimentales ne peuvent pas couvrir de façon exhaustive l'ensemble des conditions que peuvent rencontrer les giravions, aussi bien en termes de variantes de ces giravions que des conditions météorologiques. De plus, ces seuils de vitesse sont élaborés en priorité suite à des essais en vol vertical pur, puis étendus au vol d'avancement avec une forte pente par exemple par l'application de coefficients correctifs.

En outre, lors des essais en vol, la transition vers un domaine de vortex est identifiée principalement a posteriori, notamment suite à une augmentation des vibrations et/ou une augmentation de la vitesse de descente du giravion. Il peut donc s'écouler un temps non négligeable entre le moment de l'entrée du giravion dans un domaine de vortex et l'instant de sa détection.

De fait, les incertitudes ou approximations liées aux modèles de giravions utilisés, aux conditions météorologiques et à la détection de l'entrée dans le domaine de vortex lors des essais sont alors cumulées et peuvent générer des imprécisions dans la détermination des seuils de vitesse utilisés, et donc dans la détection de l'approche d'un domaine de vortex par les procédés et dispositifs de l'art antérieur.

La présente invention a alors pour objet un procédé et un système permettant d'anticiper l'entrée d'un giravion dans un domaine de vortex et d'alerter le pilote de ce risque tout en s'affranchissant des limitations mentionnées ci-dessus. En effet, le système et le procédé selon l'invention n'ont recours à aucun seuil de vitesse. Le procédé et le système selon l'invention utilisent directement la dynamique du sillage du rotor principal du giravion et plus précisément l'évolution de l'écoulement de l'air dans l'environnement du rotor principal ou bien ses effets sur le giravion. En conséquence, la présente invention est avantageusement applicable à tout giravion sans nécessiter d'essais préalables et spécifiques à chaque catégorie de giravions.

De plus, le procédé et le système selon l'invention fonctionnent quelle que soit la phase de vol du giravion, aussi bien lors d'un vol de descente verticale pure, d'un vol de descente avec une forte pente ainsi qu'à proximité d'un vol stationnaire, et quelles que soient les conditions de vent dans lesquelles évolue le giravion.

Le procédé d'anticipation de l'entrée dans un domaine de vortex par un giravion selon l'invention est destiné à un giravion comportant notamment un rotor principal muni de pales. Ce procédé comporte les étapes suivantes :

a) une acquisition de mesures d'au moins un paramètre permettant de caractériser une évolution de l'écoulement de l'air dans l'environnement du rotor principal,

b) une analyse de ces mesures afin d'isoler des fréquences caractéristiques de la variation de chaque paramètre, et

c) une détection d'une fréquence spécifique $f$ caractérisant la proximité d'un domaine de vortex.

Lors d'essais réalisés sur giravion en vol ainsi que sur maquettes en laboratoire, il a été constaté, en présence d'un état de vortex, l'apparition d'un phénomène de relaxation de l'anneau tourbillonnaire. Cette relaxation de l'anneau tourbillonnaire est un phénomène périodique, l'anneau tourbillonnaire ne pouvant en fait contenir qu'une quantité finie d'énergie. En effet, l'anneau tourbillonnaire caractéristique d'un état de vortex accumule de l'énergie avant d'atteindre un état de saturation correspondant à un pic de ce phénomène de relaxation périodique. Ensuite, l'énergie est libérée avant qu'un nouveau cycle de relaxation ne commence.

Cette relaxation périodique de l'anneau tourbillonnaire est un phénomène associé à la saturation de cet anneau tourbillonnaire et est caractéristique de l'évolution du sillage laissé par le rotor principal. Dès lors, la relaxation périodique de l'anneau tourbillonnaire est directement liée à la présence de l'état de vortex. Cette relaxation périodique de l'anneau tourbillonnaire évolue de manière continue et est donc également observable aussi bien lorsque le giravion se situe dans un domaine de vortex que lorsque le giravion est en approche de ce domaine de vortex, à savoir avant que l'état de vortex ait une influence et des effets dangereux sur le vol du giravion. Les amplitudes de cette relaxation périodique sont cependant plus faibles à proximité d'un domaine de vortex que dans un domaine de vortex. Par contre, ce phénomène périodique disparaît lorsque le giravion s'éloigne du domaine de vortex.

Cette relaxation périodique de l'anneau tourbillonnaire dans un domaine de vortex ou bien à proximité de ce domaine de vortex est un phénomène à basse fréquence. En effet, il apparait que la fréquence spécifique $f$ caractérisant cette relaxation périodique de l'anneau tourbillonnaire est inférieure à un Hertz (1 Hz).

Un giravion ne comporte généralement pas de phénomène périodique avec une si basse fréquence. Par exemple, la fréquence de rotation d'un rotor principal est généralement comprise entre 250 et 350 tours/minute, à savoir 4.17 Hz et 5.83 Hz, selon les dimensions du rotor principal et celles du giravion. Dès lors, la détection d'une fréquence spécifique $f$ inférieure à 1Hz sur des mesures d'un paramètre lié à l'écoulement de l'air dans l'environnement du rotor principal du giravion permet de détecter la présence d'une relaxation périodique de l'anneau tourbillonnaire et donc la proximité d'un domaine de vortex.

Dès lors, le procédé d'anticipation de l'entrée dans un domaine de vortex selon l'invention vise à anticiper l'approche d'un état de vortex en observant le sillage généré en vol par le rotor principal et en détectant la présence d'une relaxation périodique de l'anneau tourbillonnaire caractéristique de l'état de vortex.

De la sorte, après acquisition de mesures d'au moins un paramètre caractérisant une évolution de l'écoulement de l'air dans l'environnement du rotor principal du giravion, une analyse modale de ces mesures permet d'isoler des fréquences caractéristiques de la variation de chaque paramètre. Puis la détection d'une fréquence spécifique $f$ parmi les fréquences caractéristiques identifiées permet d'établir la proximité d'un domaine de vortex.

Un paramètre permettant de caractériser une évolution de l'écoulement de l'air dans l'environnement du rotor principal du giravion peut être un paramètre caractérisant directement cet écoulement de l'air, tel que la pression de l'air ou bien la vitesse de l'air dans l'environnement du rotor principal.

La pression de l'air permet de caractériser cet écoulement d'air et de mettre en évidence une éventuelle saturation périodique de cet écoulement, signe de l'apparition d'une relaxation périodique de l'anneau tourbillonnaire et donc de la proximité ou bien de la présence d'un état de vortex. Cette pression de l'air peut être mesurée par un capteur de pression positionné de préférence sur la poutre de queue du giravion, en dessous de l'extrémité des pales du rotor principal. C'est en effet dans la zone arrière du rotor principal qu'apparait tout d'abord un état de vortex.

La vitesse de l'air permet également de caractériser cet écoulement d'air et, par suite, de détecter l'apparition d'une relaxation périodique de l'anneau tourbillonnaire. Un vecteur vitesse de l'air, caractérisé par une direction et une norme, peut être mesuré par un anémomètre agencé sur le giravion, par exemple sur la poutre de queue ou bien sur le fuselage du giravion. Ce vecteur vitesse de l'air est généralement mesuré à la position de l'anémomètre, dans ce cas sous le rotor principal.

Ce vecteur vitesse de l'air peut également être mesuré de façon déportée par rapport à la position de l'anémomètre. C'est par exemple le cas avec un anémomètre optique, tel un anémomètre LIDAR d'après l'expression en langue anglaise « LIght Détection and Ranging » qui permet de mesurer le vecteur vitesse de l'air par émission/réception séquentielle d'un faisceau lumineux LASER. Le vecteur vitesse de l'air peut alors être mesuré directement à l'emplacement de l'apparition de l'anneau tourbillonnaire, à savoir à proximité de l'extrémité d'une pale, de préférence de la pale située dans la zone arrière du rotor principal. La fenêtre de mesure de ce vecteur vitesse de l'air est par exemple située au-dessus de l'extrémité de cette pale et a pour dimensions minimales, une hauteur égale au rayon de la pale et une largeur égale à la moitié de ce rayon.

Un paramètre permettant de caractériser l'évolution de l'écoulement de l'air dans l'environnement du rotor principal peut également être un paramètre lié au couplage entre le rotor principal et cet écoulement de l'air. En effet, les changements et les variations de cet écoulement de l'air suite à l'apparition ou la proximité d'un état de vortex peuvent affecter des caractéristiques du giravion et de son rotor principal.

Ce paramètre peut par exemple être l'accélération verticale du giravion par rapport au sol, fournie par exemple par une centrale inertielle embarquée dans le giravion ou bien la vitesse verticale du giravion. Ce paramètre peut aussi être la portance du rotor principal du giravion.

Ce paramètre peut également correspondre aux efforts exercés dans les commandes de vol liées aux pales du rotor principal ou bien aux efforts nécessaires pour manoeuvrer ces commandes de vol, en particulier lorsque ces commandes de vol sont en liaison directe avec les pales du rotor principal.

Lors de l'acquisition de mesures, un seul paramètre mesuré peut être suffisant pour déterminer par anticipation l'approche d'un domaine de vortex.

Cependant, l'utilisation d'au moins deux paramètres peut permettre une meilleure fiabilité dans la détection de l'approche d'un domaine de vortex pour d'une part anticiper au plus tôt son apparition et d'autre part éviter une détection d'un domaine de vortex dont l'apparition n'est pas certaine. Parmi ces paramètres, un premier paramètre peut par exemple être lié directement à l'écoulement d'air et un deuxième paramètre peut être lié à ses effets sur le giravion ou bien sur son rotor principal.

Il est également possible de coupler l'utilisation d'au moins un paramètre permettant de caractériser l'évolution de l'écoulement de l'air dans l'environnement du rotor principal et précédemment décrit avec des seuils de vitesse délimitant un domaine de vol relativement localisé correspondant à l'apparition probable d'un état de vortex et défini dans l'art antérieur.

Par ailleurs, les fréquences recherchées sont des basses fréquences, la fréquence spécifique *f* recherchée étant inférieure à 1 Hz. En conséquence, l'utilisation lors de l'acquisition d'une fréquence d'acquisition faible permet avantageusement de filtrer les signaux à plus hautes fréquences pouvant perturber les mesures. Dès lors, les mesures sont ainsi nettoyées d'au moins les signaux à plus hautes fréquences dès leur acquisition ce qui facilite l'analyse effectuée ensuite.

De plus, la fréquence d'acquisition doit être compatible avec la fréquence spécifique *f* recherchée, c'est-à-dire supérieure à cette fréquence spécifique *f* recherchée. L'acquisition de mesures d'au moins un paramètre est effectuée de préférence avec une fréquence d'acquisition supérieure ou égale à deux fois la fréquence spécifique *f* par application du critère de Nyquist. De fait, la fréquence spécifique *f* recherchée étant inférieure à 1 Hz, la fréquence d'acquisition est avantageusement supérieure ou égale à 2 Hz.

Par exemple, l'acquisition de mesures d'au moins un paramètre est effectuée avec une fréquence d'acquisition comprise entre deux et dix fois la fréquence spécifique *f*. De fait, la fréquence spécifique *f* étant inférieure à 1 Hz, la fréquence d'acquisition est avantageusement comprise entre 2 et 10 Hz.

Dans le cas où l'acquisition de ces mesures est faite de façon continue, une étape intermédiaire d'échantillonnage de ces mesures est effectuée entre les étapes d'acquisition et d'analyse. Cette étape intermédiaire d'échantillonnage est effectuée avec une fréquence d'échantillonnage égale à la fréquence d'acquisition précédemment évoquée.

L'acquisition de ces mesures est effectuée pendant une durée d'acquisition compatible avec la fréquence spécifique *f* recherchée. La durée d'acquisition est donc fonction de la fréquence spécifique *f* recherchée. Cette durée d'acquisition est de préférence supérieure ou égale à deux fois la période correspondant à cette fréquence spécifique *f*. De fait, la fréquence spécifique *f* recherchée étant inférieure à 1 Hz, la durée d'acquisition est typiquement supérieure à 2 secondes.

Par exemple, la durée d'acquisition est comprise entre deux et cinq fois la période correspondant à la fréquence caractéristique *f*. De fait, la fréquence spécifique *f* recherchée étant inférieure à 1 Hz, la durée d'acquisition est comprise entre 2 et 5 secondes.

Suite à l'acquisition de ces mesures, leur analyse permet d'isoler des fréquences caractéristiques de la variation de chaque paramètre mesuré, d'identifier ses composantes spectrales et d'estimer leurs amplitudes. Cette analyse est par exemple une analyse modale par application de la transformée de Fourier ou toute autre méthode d'analyse modale. Cette analyse permet d'identifier une fréquence fondamentale $f_0$ et le cas échéant une ou plusieurs fréquences caractéristiques associées.

Lors de cette analyse, un filtrage et/ou un nettoyage des mesures peut être effectué de façon connue afin de supprimer éventuellement du bruit présent dans les mesures. Par exemple, un filtrage peut être effectué en supprimant les hautes fréquences supérieures à un seuil d'amplitude prédéfini.

Le procédé selon l'invention est destiné à être utilisé dans les phases à risque pour l'apparition du domaine de vortex à savoir un vol de descente verticale pure, un vol de descente avec une forte pente ainsi qu'à proximité d'un vol stationnaire. L'acquisition des mesures est alors faite tant que le giravion évolue dans une de ces phases de vol à risque, éventuellement avec un taux de recouvrement entre deux acquisitions successives.

Suite à l'analyse de ces mesures, la détection d'une éventuelle fréquence spécifique $f$ caractérisant la proximité d'un domaine de vortex parmi les fréquences caractéristiques identifiées pour la variation de chaque paramètre mesuré est effectuée.

Dès lors, toute fréquence caractéristique inférieure à 1 Hz peut être considérée comme une fréquence spécifique $f$ caractérisant la détection d'une relaxation périodique d'un anneau tourbillonnaire caractéristique de l'état de vortex et donc de la proximité d'un domaine de vortex.

Toutefois, afin de prendre en compte la présence éventuelle de bruit parmi les mesures, la fréquence spécifique $f$ est de préférence détectée lorsque son amplitude est supérieure à un pourcentage prédéterminé de l'amplitude de la fréquence fondamentale $f_0$. De la sorte, le procédé selon l'invention permet de filtrer le bruit parmi les mesures et évite ainsi de fausses détections de la proximité d'un domaine de vortex. Le pourcentage prédéterminé est par exemple égal à 5% ou 10 %.

Suite à la détection d'une fréquence spécifique $f$ caractérisant la proximité d'un domaine de vortex, le procédé selon l'invention peut comporter une étape supplémentaire afin de signaler cette détection à l'équipage du giravion consistant en un déclenchement (d) d'une alarme d'approche d'un domaine de vortex dès qu'une fréquence spécifique $f$ est détectée.

Cette alarme peut être signalée à l'équipage du giravion, et au pilote en particulier, de façon visuelle, par exemple par l'intermédiaire de l'allumage d'un voyant dédié ou bien l'affichage d'un message spécifique sur un écran d'information. Cette alarme peut également être signalée de façon sonore, par exemple par l'émission d'un son spécifique ou bien d'un message enregistré.

Suite au déclenchement de l'alarme, le procédé selon l'invention continue l'acquisition de mesures, leur analyse et la détection d'une fréquence spécifique $f$. De la sorte, le procédé continue de signaler à l'équipage la proximité d'un domaine de vortex tant qu'une fréquence spécifique $f$ est détectée. Ensuite, lorsqu'aucune fréquence spécifique $f$ n'est détectée, la signalisation de l'alarme est arrêtée et l'équipage est ainsi informé que le giravion s'est suffisamment écarté du domaine de vortex.

En outre, le procédé selon l'invention peut mettre en oeuvre des temporisations d'une part entre la détection de la fréquence spécifique $f$ caractérisant la proximité d'un domaine de vortex et le déclenchement de l'alarme et d'autre part entre la détection d'aucune fréquence spécifique $f$ et l'arrêt de l'alarme. Ces temporisations permettent d'éviter des déclenchements et des arrêts intempestifs et successifs de l'alarme.

Par exemple, le déclenchement de l'alarme et sa signalisation au pilote se produisent une seconde (1s) après la détection de la fréquence spécifique $f$ et l'arrêt de l'alarme se produit trois secondes (3s) après qu'aucune fréquence spécifique $f$ n'ait été détectée.

Par ailleurs, le procédé selon l'invention peut comporter des conditions d'inhibition désactivant le déclenchement de l'alarme.

Une première condition d'inhibition correspond par exemple à un giravion évoluant à une hauteur par rapport au sol inférieure ou égale à une hauteur limite. Cette première condition d'inhibition caractérise une position du giravion proche du sol qui correspond par exemple à une phase de décollage ou d'atterrissage. Cette position proche du sol peut également correspondre à une phase d'atterrissage avortée. De plus, en dessous de cette hauteur limite, le giravion est soumis à l'effet de sol qui peut induire l'apparition de basses fréquences susceptibles d'être considérées à tort comme caractérisant la proximité d'un domaine de vortex.

Une deuxième condition d'inhibition correspond à un giravion comportant au moins deux moteurs et entré dans un mode de fonctionnement d'urgence suite à un dysfonctionnement d'un des moteurs depuis une durée inférieure à une durée prédéterminée.

Ces deux conditions d'inhibition caractérisent des phases de vol particulières, voire d'urgence, monopolisant toute l'attention du pilote. Ajouter la signalisation d'une alarme à une situation déjà complexe pourrait perturber le pilote dans la gestion de cette situation sans lui apporter d'aide supplémentaire. Il est donc préférable de ne pas signaler alors l'approche d'un domaine de vortex. De plus, le giravion se trouve dans une phase transitoire, par exemple suite à la perte d'un moteur, pouvant expliquer l'approche d'un domaine de vortex, mais le pilote du giravion gère alors cette situation pour revenir à une phase de vol stable et s'éloigner donc naturellement de ce domaine de vortex. Signaler au pilote cette approche d'un domaine de vortex ne lui apporte aucune aide dans ce contexte et peut au contraire le perturber dans le déroulement de la procédure à appliquer.

Par exemple, la hauteur limite est comprise entre 20 et 100 pieds (20 et 100ft) et la durée prédéterminée est égale à 30 secondes (30s). Ces valeurs sont généralement indépendantes de la famille du giravion. Cette durée de 30s correspond à la durée du régime dit de super urgence OEI (signifiant en langue anglaise « One Engine Inoperative ») des giravions, cette valeur pouvant varier en fonction de la durée admissible de ce régime de super urgence.

Par ailleurs, afin d'éliminer d'éventuelles basses fréquences parasites susceptibles de provoquer par une détection erronée de la proximité d'un domaine de vortex, une valeur de la fréquence spécifique *f* peut être estimée. De plus, une incertitude autour de cette valeur estimée de la fréquence spécifique *f* est prise en compte pour la détection de la fréquence spécifique *f* parmi les fréquences caractéristiques identifiées.

En conséquence, lors de la détection d'une fréquence spécifique *f* caractérisant la proximité d'un domaine de vortex, seules les fréquences caractéristiques situées dans un intervalle dont les bornes sont la valeur estimée de la fréquence spécifique *f* à laquelle est respectivement soustraite et ajoutée l'incertitude, seront détectées pour anticiper l'approche du domaine de vortex. Cette incertitude est par exemple égale à 5 ou 10% de la valeur estimée de la fréquence spécifique *f*.

De plus, cette estimation de la fréquence spécifique *f* permet également d'optimiser la fréquence d'acquisition et la durée d'acquisition.

La fréquence spécifique *f* peut ainsi être estimée selon la relation :

$$St = \frac{f \times \varnothing}{V},$$

*St* étant le nombre de Strouhal, $\varnothing$ étant le diamètre du rotor principal et *V* la vitesse de déplacement du giravion par rapport à l'air. Cette vitesse de déplacement *V* du giravion s'entend en trois dimensions et est la somme de la vitesse d'avancement et de la vitesse verticale du giravion.

Le nombre de Strouhal est un nombre sans dimension décrivant notamment les mécanismes de circulation oscillante d'une masse d'air. Le nombre de Strouhal est indépendant des caractéristiques du giravion.

Dans le cadre d'une approximation acceptable pour son application au procédé selon l'invention, le nombre de Strouhal *St,* variant très peu pour les objets usuels comme les disques, peut être considéré comme une constante quel que soit le giravion et quelles que soient ses conditions de vol. Par exemple, le nombre de Strouhal *St* est considéré égal à 0.16.

Le nombre de Strouhal *St* peut aussi être déterminé en fonction d'un angle entre le vecteur représentant la vitesse de déplacement *V* du giravion par rapport à l'air et un plan formé par le rotor principal en rotation. En effet, le nombre de Strouhal augmente quand l'angle du vecteur vitesse de l'air par rapport au plan du rotor principal augmente.

Enfin, afin d'affiner la détection d'un domaine de vortex, le procédé selon l'invention peut être couplé avec des méthodes classiques de détection de l'approche d'un domaine de vortex par comparaison de certaines vitesses du giravion avec des seuils de vitesse.

L'invention a également pour objet un système d'anticipation de l'entrée dans un domaine de vortex par un giravion, le giravion comportant un rotor principal muni de pales. Ce système comporte :

- au moins un dispositif de mesure d'au moins un paramètre permettant de caractériser une évolution de l'écoulement de l'air dans l'environnement du rotor principal,
- un dispositif de mémorisation contenant des instructions de calcul et pouvant stocker les mesures de chaque paramètre,
- un dispositif de calcul relié à chaque dispositif de mesure et au dispositif de mémorisation, le dispositif de calcul étant destiné à détecter l'approche d'un domaine de vortex par le giravion et
- un dispositif de signalisation signalant la détection de la proximité d'un domaine de vortex par le giravion, le dispositif de signalisation étant relié au dispositif de calcul.

Le dispositif de mesure est par exemple un capteur de pression, un anémomètre ou bien une centrale inertielle. Le dispositif de calcul est par exemple un calculateur et le dispositif de signalisation est par exemple un voyant, un écran d'information sur lequel est affiché un message signalant l'alarme ou bien un haut-parleur.

Le système d'anticipation est configuré pour mettre en oeuvre le procédé d'anticipation de l'entrée dans un domaine de vortex précédemment décrit afin de déterminer l'approche d'un giravion d'un domaine de vortex.

L'invention et ses avantages apparaîtront avec plus de détails dans le cadre de la description suivante qui illustre des exemples de réalisation préférés, donnés sans aucun caractère limitatif, en référence aux figures annexées qui représentent :

- la figure 1, une représentation d'un giravion,
- la figure 2, une illustration de l'écoulement de l'air autour d'un rotor principal d'un giravion dans un domaine de vortex,
- la figure 3, un système d'anticipation de l'entrée d'un giravion dans un domaine de vortex,
- la figure 4, un schéma synoptique d'un procédé d'anticipation de l'entrée dans un domaine de vortex par un giravion, et
- les figures 5 à 7, trois diagrammes représentant l'analyse modale des mesures de l'écoulement d'air.

Les éléments présents dans plusieurs figures distinctes sont affectés d'une seule et même référence.

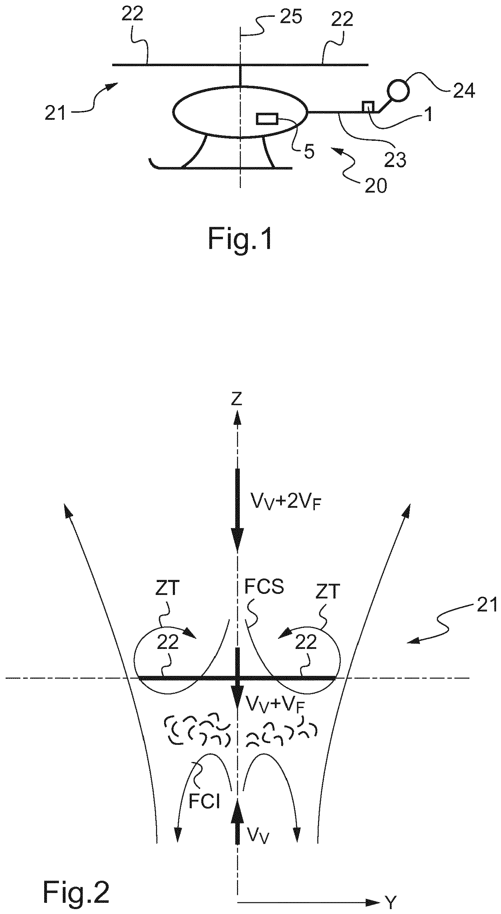

Sur la figure 1, un giravion 20 comporte un rotor principal 21 muni de pales 22 tournant autour d'un axe 25 ainsi qu'une poutre de queue 23 à l'extrémité de laquelle est agencé un rotor arrière 24 anticouple. Le giravion 20 comporte également une centrale inertielle 5 capable de fournir des informations de vol telles que les accélérations du giravion 20 par rapport au sol.

La figure 2 représente le rotor principal 21 évoluant dans un domaine de vortex. Les directions des vitesses de l'écoulement d'air représentées sur cette figure 2 correspondent à un vol vertical en descente lente du giravion 20.

La vitesse *Vv* désigne la composante verticale de la vitesse amont de l'écoulement de l'air, normale au plan formé par le rotor principal 21 et la valeur $V_F$, appelée « vitesse de Froude » par l'homme du métier, est supérieure dans cette situation à la vitesse *Vv*. On constate qu'un sillage se forme à la partie inférieure du rotor principal 21, ce qui oblige les filets d'air centraux supérieurs FCS à créer une zone tourbillonnaire ZT vers la périphérie des pales 22.

Dans ces conditions, un phénomène d'état de vortex manifesté notamment par des vibrations ressenties par l'équipage du giravion 20 prend naissance quand le giravion 20 amorce une descente purement verticale ou bien avec une forte pente de descente, le rotor principal 21 descendant alors dans son propre souffle et perdant de la portance en raison de son isolement par rapport à l'écoulement d'air. Une chute brutale du giravion 20 s'ensuit si aucune manoeuvre correctrice n'est entreprise par le pilote du giravion 20.

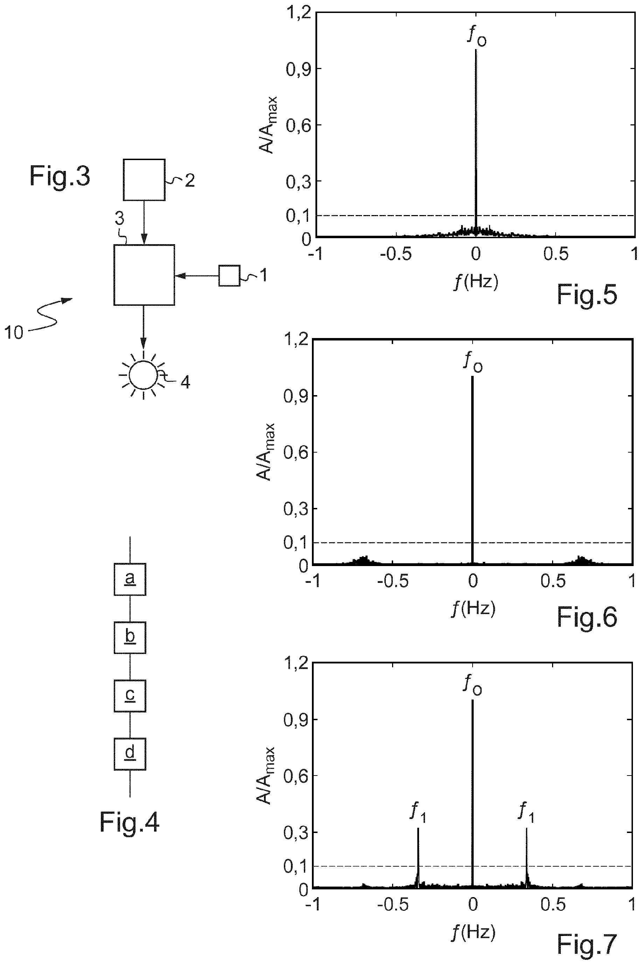

Pour éviter une telle situation dangereuse propre aux giravions, le giravion 20 comporte un système 10 d'anticipation de l'entrée dans un domaine de vortex. Ce système 10 permet de mettre en oeuvre un procédé d'anticipation de l'entrée dans un domaine de vortex par le giravion 20 dont un schéma synoptique est représenté sur la figure 4.

Le système 10 peut ainsi détecter, puis signaler de façon prédictive au pilote du giravion 20 l'approche d'un domaine de vortex. Dès lors, le pilote peut prendre les mesures qui s'imposent en anticipant son action par rapport à cette approche, évitant ainsi l'entrée du giravion 20 dans ce domaine de vortex.

Le système 10 est représenté sur la figure 3 et comporte :

- un dispositif de mesure 1 pour mesurer un paramètre permettant de caractériser une évolution de l'écoulement de l'air dans l'environnement du rotor principal 21,
- un dispositif de mémorisation 2 permettant de stocker les mesures de pressions de l'air acquises par le dispositif de mesure 1 ainsi que des instructions nécessaires à la mise en oeuvre du procédé,
- un dispositif de calcul 3 relié au dispositif de mesure 1 et à un dispositif de mémorisation 2, et destiné à appliquer ces instructions et à détecter ainsi l'approche d'un domaine de vortex par le giravion 20,
- un dispositif de signalisation 4 signalant la proximité d'un domaine de vortex par le giravion 20 au pilote du giravion 20, le dispositif de signalisation 4 étant relié au dispositif de calcul 3.

Le dispositif de mesure 1 est un capteur de pression positionné sur la poutre de queue 23, au niveau de l'extrémité des pales 22 du rotor principal 21. Le capteur de pression permet ainsi de mesurer la pression de l'air dans le sillage du rotor principal 21.

Le dispositif de calcul 3 est un calculateur et le dispositif de signalisation 4 est un voyant situé sur un tableau de bord du giravion 20.

Le procédé d'anticipation de l'entrée dans un domaine de vortex par un giravion 20 comporte, comme représenté sur la figure 4, quatre étapes.

Tout d'abord, une acquisition (a) de mesures d'un paramètre caractérisant une évolution de l'écoulement de l'air dans l'environnement du rotor principal 21 du giravion 20 est réalisée. Cette acquisition (a) est réalisée par l'intermédiaire du dispositif de mesure 1 et ce paramètre est donc la pression de l'air situé entre la zone arrière du rotor principal 21 et la poutre de queue 23.

Ce paramètre peut également être un paramètre lié au couplage entre le rotor principal 21 et l'écoulement de l'air dans l'environnement du rotor principal 21. En effet, l'évolution de cet écoulement de l'air, suite à l'apparition ou la proximité d'un état de vortex, peut affecter des caractéristiques du giravion 20 et de son rotor principal 21. Ce paramètre peut par exemple être l'accélération verticale du giravion 20 par rapport au sol, fournie par la centrale inertielle 5.

Ensuite, une analyse (b) des mesures acquises est réalisée. Cette analyse (b) est par exemple une analyse modale et permet d'isoler des fréquences caractéristiques de la variation de ce paramètre. Les résultats de cette analyse dans trois cas de vol du giravion 20 apparaissent sous la forme de représentations « spectrales symétriques » respectivement sur les figures 5 à 7. La figure 5 représente le cas d'un giravion en vol sensiblement vertical avec un très faible taux de descente, la figure 6 représente le cas d'un giravion en vol en autorotation et la figure 7 représente le cas d'un giravion évoluant dans un domaine de vortex.

On constate pour chaque cas la présence d'une fréquence fondamentale centrale $f_0$. Les résultats sont affichés pour des fréquences inférieures à 1 Hz et les amplitudes de ce graphique spectral sont normalisées par l'amplitude $A_{max}$ de la fréquence fondamentale $f_0$.

Pour les deux cas de vol sensiblement vertical avec un très faible taux de descente et de vol en autorotation, on constate, hormis la fréquence fondamentale $f_0$, uniquement la présence de fréquences de très faibles amplitudes correspondant à du bruit lié aux mesures. L'amplitude A de ce bruit est nettement inférieure à 10% de l'amplitude $A_{max}$ de la fréquence fondamentale $f_0$ comme représenté sur les figures 5 et 6. Aucune fréquence caractéristique de la variation du paramètre mesuré n'a donc été identifiée pour ces deux cas.

Pour le cas d'un giravion évoluant dans un domaine de vortex, on constate la présence en plus de la fréquence fondamentale $f_0$ et de fréquences de très faibles amplitudes correspondant à du bruit lié aux mesures, de deux fréquences significatives $f_1$, dont l'amplitude A est supérieure à 10% de l'amplitude $A_{max}$ de la fréquence fondamentale $f_0$. Ce graphique étant symétrique, l'analyse des mesures acquises a ainsi permis d'identifier une fréquence caractéristique $f_1$ de la variation du paramètre mesuré dans une plage de fréquences inférieures à 1 Hz.

Par la suite, une détection (c) d'une fréquence spécifique *f* parmi les fréquences caractéristiques identifiées est réalisée afin d'anticiper une éventuelle entrée du giravion 20 dans un domaine de vortex.

Suite à différents essais réalisés aussi bien sur un giravion en vol que sur des maquettes en laboratoire, il a été constaté qu'un état de vortex s'accompagnait de l'apparition d'un phénomène de relaxation périodique de l'anneau tourbillonnaire de cet état de vortex. Cette relaxation périodique de l'anneau tourbillonnaire peut notamment être caractérisée par une telle fréquence spécifique *f*.

Cette détection (c) d'une fréquence spécifique *f* vise donc à vérifier si cette fréquence spécifique *f*, caractéristique de la présence d'une relaxation périodique de l'anneau tourbillonnaire d'un état de vortex et donc de la présence ou la proximité d'un état de vortex, se trouve parmi les fréquences caractéristiques identifiées lors de l'analyse des mesure acquises.

Les essais réalisés ont mis en évidence que la fréquence spécifique *f* caractérisant cette relaxation périodique de l'anneau tourbillonnaire est inférieure à un Hertz (1 Hz). Par ailleurs, un giravion ne comporte généralement pas de phénomène périodique avec une telle basse fréquence inférieure à 1 Hz, en particulier dans les phases de vol concernées par le risque d'apparition d'état de vortex.

En conséquence, la détection de la fréquence caractéristique $f_1$ inférieure à 1 Hz dans le cas d'un giravion évoluant dans un domaine de vortex peut être considérée comme une fréquence spécifique *f* caractérisant la détection d'une relaxation périodique d'un anneau tourbillonnaire caractéristique de l'état de vortex. Le procédé d'anticipation de l'entrée dans un domaine de vortex confirme ainsi que le giravion 20 évolue dans un domaine de vortex.

De même, pour les deux autres cas, la détection d'aucune fréquence caractéristique inférieure à 1 Hz confirme que le giravion 20 n'évolue pas dans un domaine de vortex.

Toutefois, comme on le constate sur les graphiques représentés sur les figures 5 à 7, du bruit est présent et peut éventuellement perturber la détection de la fréquence spécifique *f*. Dès lors, afin d'éliminer ce bruit et éviter ainsi de fausses détections de la proximité d'un domaine de vortex, la fréquence spécifique *f* est détectée lorsque son amplitude *A* est supérieure à un pourcentage prédéterminé de l'amplitude $A_{max}$ de la fréquence fondamentale $f_0$. Le pourcentage prédéterminé est égal à 10 % sur les graphiques représentés sur les figures 5 à 7.

Par ailleurs, lors de la détection (c) d'une fréquence spécifique *f*, une fréquence spécifique *f* précisément définie peut être recherchée afin d'affiner la détection d'un domaine de vortex et d'éliminer d'éventuelles basses fréquences parasites. Cette fréquence spécifique *f* peut être définie par calcul, notamment selon les dimensions du rotor principal 21 et selon la vitesse de déplacement par rapport à l'air du giravion 20. Un intervalle d'incertitude est pris en compte autour de cette fréquence spécifique *f* précisément définie afin de détecter une fréquence caractéristique correspondant à la présence ou bien la proximité d'un domaine de vortex.

Suite à la détection d'une fréquence spécifique *f* caractérisant la proximité d'un domaine de vortex parmi les fréquences caractéristiques identifiées lors de l'analyse des mesures, un déclenchement (d) d'une alarme d'approche d'un domaine de vortex est réalisé. Cette alarme est signalée par l'allumage du dispositif de signalisation 4. Le pilote du giravion 20 est alors informé de la proximité d'un domaine de vortex et peut alors réaliser les manoeuvres nécessaires afin d'éviter que le giravion 20 rentre effectivement dans ce domaine de vortex.

Cette alarme est signalée tant qu'une fréquence spécifique *f* est détectée. Le dispositif de signalisation est ensuite éteint dès qu'aucune fréquence spécifique *f* n'est détectée par le procédé d'anticipation de l'entrée dans un domaine de vortex afin d'informer l'équipage que le giravion s'est suffisamment écarté du domaine de vortex.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé d'anticipation de l'entrée dans un domaine de vortex par un giravion (20), ledit giravion (20) comportant un rotor principal (21) muni de pales (22), **caractérisé en ce que** ledit procédé comporte les étapes suivantes :

   a) une acquisition de mesures d'au moins un paramètre permettant de caractériser une évolution de l'écoulement de l'air dans l'environnement dudit rotor principal (21),
   b) une analyse desdites mesures afin d'isoler des fréquences caractéristiques de la variation de chaque paramètre, et
   c) une détection d'une fréquence spécifique *f* caractérisant la proximité d'un domaine de vortex, ladite fréquence spécifique *f* est inférieure à 1 Hertz (1 Hz).

2. Procédé selon la revendication 1, **caractérisé en ce que** ladite fréquence spécifique *f* est estimée selon la relation :

$$St = \frac{f \times \emptyset}{V},$$

$St$ étant le nombre de Strouhal, $\emptyset$ étant le diamètre dudit rotor principal (21) et $V$ une vitesse de déplacement dudit giravion (20) par rapport à l'air.

**3.** Procédé selon la revendication 2, **caractérisé en ce que** ledit nombre de Strouhal $St$ est considéré comme une constante.

**4.** Procédé selon la revendication 2, **caractérisé en ce que** ledit nombre de Strouhal $St$ est déterminé en fonction d'un angle entre un vecteur représentant ladite vitesse de déplacement dudit giravion (20) par rapport à l'air et un plan formé par ledit rotor principal (21) en rotation.

**5.** Procédé selon l'une quelconque des revendications 1 à 4, **caractérisé en ce que** ladite fréquence spécifique $f$ est détectée lorsque son amplitude est supérieure à un pourcentage prédéterminé de l'amplitude d'une fréquence fondamentale $f_0$ de ladite variation dudit paramètre.

**6.** Procédé selon la revendication 5, **caractérisé en ce que** ledit pourcentage prédéterminé est égal à 10%.

**7.** Procédé selon l'une quelconque des revendications 1 à 6, **caractérisé en ce que** ladite acquisition (a) de mesures d'au moins un paramètre est effectuée avec une fréquence d'acquisition supérieure ou égale à deux fois ladite fréquence spécifique $f$.

**8.** Procédé selon la revendication 7, **caractérisé en ce que** ladite acquisition (a) de mesures d'au moins un paramètre est effectuée avec une fréquence d'acquisition comprise entre deux et dix fois ladite fréquence spécifique $f$.

**9.** Procédé selon l'une quelconque des revendications 1 à 8, **caractérisé en ce que** ladite acquisition (a) de mesures d'au moins un paramètre est effectuée pendant une durée d'acquisition supérieure ou égale à deux fois une période correspondant à ladite fréquence spécifique $f$.

**10.** Procédé selon la revendication 9, **caractérisé en ce que** ladite acquisition (a) de mesures d'au moins un paramètre est effectuée pendant une durée d'acquisition comprise entre deux et cinq fois ladite période correspondant à ladite fréquence caractéristique $f$ d'un domaine de vortex.

**11.** Procédé selon l'une quelconque des revendications 1 à 10, **caractérisé en ce que** lors de ladite acquisition (a) de mesures, un seul paramètre est mesuré.

**12.** Procédé selon l'une quelconque des revendications 1 à 11, **caractérisé en ce que** chaque paramètre mesuré lors de ladite acquisition (a) de mesures est choisi dans une liste comportant une accélération verticale dudit giravion (20) par rapport au sol, une vitesse de l'air dans l'environnement dudit rotor principal (21), une pression de l'air dans l'environnement dudit rotor principal (21), des efforts exercés dans des commandes de vol liées auxdites pales (22) dudit rotor principal (21) et une portance dudit rotor principal (21).

**13.** Procédé selon l'une quelconque des revendications 1 à 12, **caractérisé en ce que** ledit procédé comporte une étape supplémentaire de déclenchement (d) d'une alarme d'approche d'un domaine de vortex par un giravion (20) dès que ladite fréquence spécifique $f$ est détectée.

**14.** Système (10) d'anticipation de l'entrée dans un domaine de vortex par un giravion (20), ledit giravion (20) comportant un rotor principal (21) muni de pales (22), ledit système (10) comportant :

- au moins un dispositif de mesure (1) d'au moins un paramètre permettant de caractériser une évolution de l'écoulement de l'air dans l'environnement dudit rotor principal (21),
- un dispositif de mémorisation (2) contenant des instructions de calcul et pouvant stocker lesdites mesures de chaque paramètre,
- un dispositif de calcul (3) relié à chaque dispositif de mesure (1) et audit dispositif de mémorisation (2), ledit dispositif de calcul (3) étant destiné à détecter l'approche d'un domaine de vortex par ledit giravion (20), et
- un dispositif de signalisation (4) signalant la détection de la proximité d'un domaine de vortex par ledit giravion (20), ledit dispositif de signalisation (4) étant relié audit dispositif de calcul (3),

**caractérisé en ce que** ledit système (10) est configuré pour mettre en oeuvre ledit procédé selon l'une quelconque des revendications 1 à 13.

**Patentansprüche**

**1.** Verfahren zum Voraussehen des Eintritts eines Drehflüglers (20) in eine Wirbelzone, wobei der Drehflügler (20) einen mit Blättern (22) versehenen Hauptrotor (21) umfasst,
**dadurch gekennzeichnet, dass** das Verfahren die folgenden Schritte umfasst:

a) eine Erfassung von Messungen von mindestens einem Parameter, der es ermöglicht, eine Änderung des Luftstroms in der Umgebung des Hauptrotors (21) zu charakterisieren,
(b) eine Analyse dieser Messungen, um Frequenzen zu isolieren, die für die Variation jedes Parameters charakteristisch sind; und
c) ein Erfassen einer spezifischen Frequenz *f*, die die Nähe einer Wirbelzone charakterisiert, wobei die spezifische Frequenz *f* kleiner als 1 Hertz (1 Hz) ist.

2. Verfahren nach Anspruch 1,
**dadurch gekennzeichnet, dass** die spezifische Frequenz *f* gemäß der Beziehung geschätzt wird:

$$St = \frac{f \times \varnothing}{V},$$

wobei St die Strouhal-Zahl ist, $\varnothing$ der Durchmesser des Hauptrotors (21) ist und V eine Bewegungsgeschwindigkeit des Drehflüglers (20) in Bezug auf die Luft ist.

3. Verfahren nach Anspruch 2,
**dadurch gekennzeichnet, dass** die Strouhal-Zahl St als Konstante betrachtet wird.

4. Verfahren nach Anspruch 2,
**dadurch gekennzeichnet, dass** die Strouhal-Zahl St als Funktion eines Winkels zwischen einem Vektor, der die Fortbewegungsgeschwindigkeit des Drehflüglers (20) in Bezug auf die Luft darstellt, und einer durch den rotierenden Hauptrotor (21) gebildeten Ebene bestimmt wird.

5. Verfahren nach einem der Ansprüche 1 bis 4,
**dadurch gekennzeichnet, dass** die spezifische Frequenz *f* erfasst wird, wenn ihre Amplitude größer als ein vorbestimmter Prozentsatz der Amplitude einer Grundfrequenz $f_0$ der Variation des Parameters ist.

6. Verfahren nach Anspruch 5,
**dadurch gekennzeichnet, dass** der vorgegebene Prozentsatz gleich 10% ist.

7. Verfahren nach einem der Ansprüche 1 bis 6,
**dadurch gekennzeichnet, dass** die Erfassung (a) von Messungen mindestens eines Parameters mit einer Erfassungsfrequenz durchgeführt wird, die größer oder gleich dem Doppelten der spezifischen Frequenz *f* ist.

8. Verfahren nach Anspruch 7,
**dadurch gekennzeichnet, dass** die Erfassung (a) von Messungen mindestens eines Parameters mit einer Erfassungsfrequenz zwischen dem Zwei- und dem Zehnfachen der spezifischen Frequenz *f* durchgeführt wird.

9. Verfahren nach einem der Ansprüche 1 bis 8,
**dadurch gekennzeichnet, dass** die Erfassung (a) von Messungen mindestens eines Parameters während einer Erfassungszeitspanne durchgeführt wird, die größer als oder gleich dem Doppelten einer Periode ist, die der spezifischen Frequenz *f* entspricht.

10. Verfahren nach Anspruch 9,
**dadurch gekennzeichnet, dass** die Erfassung (a) von Messungen mindestens eines Parameters während einer Erfassungszeitspanne durchgeführt wird, die zwischen dem Zwei- und Fünffachen der Periode der spezifischen Frequenz *f* einer Wirbelzone liegt.

11. Verfahren nach einem der Ansprüche 1 bis 10,
**dadurch gekennzeichnet, dass** während der Erfassung (a) von Messungen ein einziger Parameter gemessen wird.

12. Verfahren nach einem der Ansprüche 1 bis 11,
**dadurch gekennzeichnet, dass** jeder Parameter, der während der Erfassung (a) von Messungen gemessen wird, aus einer Liste ausgewählt wird, die eine vertikale Beschleunigung des Drehflüglers (20) in Bezug auf den Boden, eine Luftgeschwindigkeit in der Umgebung des Hauptrotors (21), einen Luftdruck in der Umgebung des Hauptrotors (21), bei die Blätter (22) des Hauptrotors (21) betreffenden Flugsteuerungen ausgeübte Kräfte und einen Auftrieb des Hauptrotors (21) enthält.

13. Verfahren nach einem der Ansprüche 1 bis 12,
**dadurch gekennzeichnet, dass** das Verfahren einen zusätzlichen Schritt des Auslösens (d) eines Alarms wegen Annäherung eines Drehflüglers (20) an eine Wirbelzone, sobald die spezifische Frequenz f erfasst wird, umfasst.

14. System (10) zum Voraussehen des Eintritts eines Drehflüglers (20) in eine Wirbelzone, wobei der Drehflügler (20) einen mit Blättern (22) versehenen Hauptrotor (21) umfasst, wobei das System (10) umfasst:

- mindestens eine Messvorrichtung (1) zum Messen mindestens eines Parameters, der es ermöglicht, eine Änderung des Luftstroms in der Umgebung des Hauptrotors (21) zu charakterisieren,
- eine Speichervorrichtung (2), die Berechnungsanweisungen enthält und in der Lage ist, die Messungen jedes Parameters zu speichern,
- eine Berechnungsvorrichtung (3), die mit jeder Messvorrichtung (1) und mit der Speichervorrichtung (2) verbunden ist, wobei die Berechnungsvorrichtung (3) vorgesehen ist, um die Annäherung des Drehflüglers (20) an eine Wirbelzone zu erfassen, und
- eine Signalvorrichtung (4), die die Erkennung der Nähe einer Wirbelzone durch den Drehflügler (20) signalisiert, wobei die Signalvorrichtung (4) mit der Berechnungsvorrichtung (3) verbunden ist,
**dadurch gekennzeichnet, dass** das System (10) konfiguriert ist, um das Verfahren nach einem der Ansprüche 1 bis 13 durchzuführen.

## Claims

1. Method for anticipating the entry of a rotorcraft (20) into a vortex domain, the rotorcraft (20) comprising a main rotor (21) equipped with blades (22),
**characterised in that** said method comprises the following steps:

   a) acquiring measurements of at least one parameter serving to characterise variation in the flow of air in the environment of the main rotor (21),
   b) analysing the measurements in order to isolate frequencies that are characteristic of the variation of each parameter, and
   c) detecting a specific frequency $f$ characterising the proximity of a vortex domain, the specific frequency $f$ being lower than 1 Hertz (Hz).

2. Method according to claim 1,
**characterised in that** the specific frequency $f$ is estimated using the following relationship:

$$St = \frac{f \times \emptyset}{V},$$

   where $St$ is the Strouhal number, $\emptyset$ is the diameter of the main rotor (21), and $V$ is the speed at which the rotorcraft (20) is moving relative to the air.

3. Method according to claim 2,
**characterised in that** the Strouhal number $St$ is considered a constant.

4. Method according to claim 2,
**characterised in that** the Strouhal number $St$ is determined as a function of an angle between a vector representing the speed at which the rotorcraft (20) is moving relative to the air and a plane formed by the rotating main rotor (21).

5. Method according to any one of claims 1 to 4,
**characterised in that** the specific frequency $f$ is detected when its amplitude is greater than a predetermined percentage of the amplitude of a fundamental frequency $f_0$ of the variation of the parameter.

6. Method according to claim 5,
**characterised in that** the predetermined percentage is equal to 10%.

7. Method according to any one of claims 1 to 6,
**characterised in that** the acquisition (a) of measurements of at least one parameter is performed at an acquisition frequency that is greater than or equal to twice the specific frequency $f$.

8. Method according to claim 7,
**characterised in that** the acquisition (a) of measurements of at least one parameter is performed at an acquisition frequency in the range of twice to ten times the specific frequency $f$.

9. Method according to any one of claims 1 to 8,
**characterised in that** the acquisition (a) of measurements of at least one parameter is performed over an acquisition duration that is greater than or equal to twice a period corresponding to the specific frequency $f$.

10. Method according to claim 9,
**characterised in that** the acquisition (a) of measurements of at least one parameter is performed for an acquisition duration in the range of twice to five times the period corresponding to the characteristic frequency $f$ of a vortex domain.

11. Method according to any one of claims 1 to 10,
**characterised in that** during the acquisition (a) of measurements, only one parameter is measured.

12. Method according to any one of claims 1 to 11,
**characterised in that** each parameter measured during the acquisition (a) of measurements is selected from a list comprising a vertical acceleration of the rotorcraft (20) relative to the ground, an air speed in the environment of the main rotor (21), a pressure of the air in the environment of the main rotor (21), forces exerted in the flight controls associated with the blades (22) of the main rotor (21), and a lift of the main rotor (21).

13. Method according to any one of claims 1 to 12,
**characterised in that** the method comprises an additional step of triggering (d) an alarm indicating that a rotorcraft (20) is approaching a vortex domain as soon as the specific frequency $f$ is detected.

14. System (10) for anticipating the entry of a rotorcraft (20) into a vortex domain, the rotorcraft (20) comprising a main rotor (21) equipped with blades (22), the system (10) comprising:

- at least one measurement device (1) for measuring at least one parameter serving to characterise variation in the flow of air in the environment of the main rotor (21),
- a storage device (2) containing calculation instructions and capable of storing the measurements of each parameter,
- a calculation device (3) connected to each measurement device (1) and to the storage device (2), the calculation device (3) being designed to detect that the rotorcraft (20) is approaching a vortex domain, and
- a signalling device (4) for signalling detection of the rotorcraft (20) being in the proximity of a vortex domain, the signalling device (4) being connected to the calculation device (3),

**characterised in that** the system (10) is configured to perform the method according to any one of claims 1 to 13.

Fig.1

Fig.2

Fig.3

Fig.4

Fig.5

Fig.6

Fig.7

## RÉFÉRENCES CITÉES DANS LA DESCRIPTION

**Documents brevets cités dans la description**

- EP 1950718 A
- FR 2921635
- EP 2513732 A
- WO 2012007157 A
- US 20110295568 A
- FR 2978586
- WO 2004101358 A

**Littérature non-brevet citée dans la description**

- **OLIVER WESTBROOK-NETHERTON.** *An Investigation into Predicting Vortex Ring State in Rotary Aircraft,* 21 Juillet 2015
- **DAVID J; VAERNES.** *Development of a Helicopter Vortex Ring State Warning System through a Moving Map Display Computer,* Septembre 1999